# EUROPÄISCHE PATENTSCHRIFT

(11) **EP 2 898 238 B1**
(45) Veröffentlichungstag und Bekanntmachung des Hinweises auf die Patenterteilung: **07.08.2019**
(21) Anmeldenummer: 13798547.9
(22) Anmeldetag: 19.09.2013
(51) Int. Cl.: F16J 1/12, F16B 3/04, F15B 15/14

(54) **KOLBENEINHEIT EINES ARBEITSZYLINDERS**
PISTON UNIT OF A WORKING CYLINDER
UNITÉ PISTON D'UN VÉRIN

(30) Priorität: 19.09.2012 DE 202012008997 U
(43) Veröffentlichungstag der Anmeldung: 29.07.2015
(73) Patentinhaber: Bümach Engineering International B.V., 7826 TA Emmen (NL)
(72) Erfinder: BUETER, Josef, D-49733 Haren/Altenberge (DE)
(74) Vertreter: Weihrauch, Frank
(86) Internationale Anmeldenummer: PCT/DE2013/000532
(87) Internationale Veröffentlichungsnummer: WO 2014/044244

(56) Entgegenhaltungen:
- WO-A1-97/21946
- JP-A- 2001 165 118
- US-A- 1 899 343
- US-A- 4 771 678
- US-A- 5 400 695
- US-A- 5 951 064

## Beschreibung

Die Erfindung betrifft eine Kolbeneinheit eines Arbeitszylinders, insbesondere vorliegend als hydraulischer oder pneumatischer Druckstromverbraucher.

Arbeitszylinder als hydraulische oder pneumatische Druckstromverbraucher, welche eine Kolbeneinheit aufweisen, sind generell aus dem Stand der Technik bekannt.
Derartige Arbeitszylinder sind in der Regel mehrteilig ausgebildet, wobei die Kolbeneinheit aus einem Kolben und einer mit diesem verbundenen Kolbenstange besteht.

Die Verbindung des Kolbens mit der Kolbenstange erfolgt dabei bekanntermaßen durch eine form- und/oder kraft- und/oder stoffschlüssige Verbindung, wobei die Verbindung je nach Anwendungsfall sowohl lösbar als auch nicht lösbar ausgeführt sein kann.

Lösbare Verbindungen im engeren Sinne werden hierbei meist durch Verschrauben des Kolbens mit der Kolbenstange oder durch Passverbindungen realisiert, während die nicht lösbaren Verbindungen in der Regel durch Verschweißen, Verlöten oder Verkleben des Kolbens mit der Kolbenstange bereitgestellt werden.

Des Weiteren ist es aus dem Stand der Technik bekannt, Komponenten einer Kolbeneinheit, insbesondere Kolben und Kolbenstange, mittels eines eingebrachten Kopplungsstrangs formschlüssig miteinander zu verbinden.
Hierzu weisen die zu verbindenden Komponenten jeweils korrespondierende Ringnuten auf, in welche der Kopplungsstrang eingreift und so den Formschluss zwischen den Komponenten bereitstellt.
Beispielsweise ist es aus US 1 899 343 A bekannt, einen Kolben mit einer Kolbenstange zu verbinden, indem Kolben und Kolbenstange jeweils eine halbrunde radiale Vertiefung aufweisen, welche beim Verbinden einen kreisförmigen Querschnitt aufweisen und in diesen Querschnitt ein drahtförmiges Verbindungselement einzuschieben. Es wird eine Verbindung erhalten, die Kolben und Kolbenstange axial zueinander festlegt, aber eine Verdrehung nicht verhindert. Weiterhin beschreibt US 5 951 064 eine Verbindung von Rohrstücken in einem Flüssigkeitssystem, bei der die Verbindungsstücke halbrunde Nuten aufweisen die nach dem Zusammenfügen einen Hohlraum ausbilden, in die ein Draht für eine formschlüssige Verbindung eingeschoben werden kann.
Ein Nachteil derartiger Verbindungen liegt darin, dass der Kopplungsstrang gegenüber den Maßen der Ringnuten ein gewisses Untermaß aufweist, damit der Kopplungsstrang während der Montage nicht zu großen Reibungen unterliegt und überhaupt eingeschoben werden und seine Endlage in den Ringnuten einnehmen kann. Hieraus resultiert ein minimales Spiel, welches bei Lastzustandswechseln der Kolbeneinheit zu minimalen axialen Relativbewegungen zwischen Kolben und Kolbenstange führen kann.
Durch diese Relativbewegungen entstehen unerwünschte Abriebschrotungen der zwischen den Komponenten vorhandenen Dichtungselemente, welche im ungünstigen Fall zu einem Defekt etwa vorhandener Dichtungselemente und somit zu einem Ausfall des Arbeitszylinders führen. Ferner kann sich das Spiel durch die dynamischen Prozesse und damit einhergehendem Abrieb auch im Bereich von Ringnuten und Kopplungsstrang weiter erhöhen.

Es ist daher Aufgabe der Erfindung, eine Kolbeneinheit für einen Arbeitszylinder bereitzustellen, welche besonders einfach und kostengünstig herstellbar ist und welcher gleichzeitig eine hohe Dauerfestigkeit und dadurch eine erhöhte Verwendungsdauer aufweist.

Die Aufgabe wird durch die im Patentanspruch 1 aufgeführten Merkmale gelöst. Bevorzugte Weiterbildungen ergeben sich aus den Unteransprüchen.

Eine erfindungsgemäße Kolbeneinheit eines Arbeitzylinders weist einen ersten Kopplungspartner und einen zweiten Kopplungspartner auf. Der erste Kopplungspartner ist hierbei als Kolben und der zweite Kopplungspartner als Kolbenstange ausgebildet.
Die Kolbenstange kann besonders vorteilhaft als Hohlelement ausgebildet sein. Eine solche Ausbildung als Hohlelement ermöglicht die Bereitstellung einer besonders leichten Kolbenstange und dadurch eine Optimierung des Gesamtgewichts einer, eine derart ausgebildete Kolbenstange aufweisenden, Kolbeneinheit

Darüber hinaus ist erfindungsgemäß der zweite Kopplungspartner in den ersten Kopplungspartner eingeschoben.
Unter eingeschoben wird in diesem Zusammenhang verstanden, dass der zweite Kopplungspartner von dem ersten Kopplungspartner radial umgriffen wird.
Die technische Lösung kann sowohl bei einer Kolbeneinheit Anwendung finden, bei welcher die Kolbenstange nur abschnittsweise in den Kolben eingeschoben ist und der Kolben mit geschlossenem Boden ausgebildet ist, wie dies beispielsweise bei einem Differenzialarbeitszylinder regelmäßig der Fall ist, als auch bei einer Kolbeneinheit, bei der eine durchgehende Kolbenstange den Kolben durchsetzt, wie dies beispielsweise bei einem Gleichlaufzylinder der Fall ist.

Die Kolbeneinheit zeichnet sich erfindungsgemäß dadurch aus, dass die Kopplungspartner jeweils eine Ringnut aufweisen, welche vorzugsweise umlaufend ausgeführt ist und wobei die Ringnut des eingeschobenen Kopplungspartners durch eine Außennut und die Ringnut des anderen Kopplungspartners durch eine Innennut gebildet werden.

Die axiale Positionierung der Ringnut in den Kopplungspartnern erfolgt dabei erfindungsgemäß derart, dass sich die Ringnuten im gekoppelten Zustand der Kopplungspartner korrespondierend gegenüberliegen.
Unter einem korrespondierenden Gegenüberliegen wird in diesem Zusammenhang verstanden, dass die Öffnungsbereiche der Ringnuten einander zugewandt sind und sich, in axialer Richtung des Arbeitszylinders, auf gleicher Höhe befinden, wobei der sich zwischen den korrespondierend gegenüberliegenden Ringnuten ausbildende Bereich nachfolgend als Ringnutenraum bezeichnet wird.

Ferner zeichnet sich der Arbeitszylinder dadurch aus, dass einer der Kopplungspartner eine Zugangsöffnung zu dem Ringnutenraum aufweist.
Vorzugsweise ist dabei die Zugangsöffnung in dem nicht eingeschobenen Kopplungspartner angeordnet, wobei es erfindungsgemäß, je nach Anwendungsfall, auch vorgesehen sein kann, dass die Zugangsöffnung in dem eingeschobenen Kopplungspartner angeordnet ist. Die Zugangsöffnung führt vorzugsweise tangential in den Ringnutenraum.

Darüber hinaus weist eine erfindungsgemäße Kolbeneinheit einen Kopplungsstrang auf.
Der Kopplungsstrang wird insbesondere durch ein strangförmiges Metallelement gebildet und greift erfindungsgemäß in die Ringnuten beider Kopplungspartner ein.

Hierzu ist der Kopplungsstrang erfindungsgemäß durch die Zugangsöffnung des jeweiligen Kopplungspartners in den sich ausbildenden Ringraum einschiebbar. Das Einschieben des Kopplungsstrangs erfolgt dabei durch ein entsprechendes Einwirken von Außen, vorzugsweise durch ein Einschießen.

Der Kopplungsstrang wird vorzugsweise soweit eingebracht, dass sich das eingeschobene Ende des Kopplungsstrangs und der Kopplungsstrang selbst berühren.

Je nach Anwendungsfall ist es erfindungsgemäß auch möglich, den Kopplungsstrang nur abschnittsweise in den Ringraum zwischen den Kopplungspartnern einzuschieben, so dass sich das eingeschobene Ende des Kopplungsstrangs und der Kopplungsstrang selbst nicht berühren.

Während des Einschiebens formt sich der vor der Montage vorzugsweise gestreckt geformte Kopplungsstrang erfindungsgemäß so an den räumlichen Verlauf des Ringnutenraums an, dass durch ein Anliegen der axialen Außenwandungen des Kopplungsstrangs an den axialen Wandungen der Ringnuten beider Kopplungspartner eine formschlüssige Verbindung zwischen den Kopplungspartnern bereitgestellt wird. Die Kopplungspartner sind durch den Formschluss in ihrer axialen Lagebeziehung zueinander festgelegt. Axiale Kräfte bewirken eine Scherbelastung des Kopplungsstrangs. Es ist von der erfindungsgemäßen Lösung auch umfasst, dass mehrere Kopplungsstränge axial aneinander anliegend in einem entsprechend breit geformten Ringnutenraum angeordnet sein können, um hohe Scherkräfte aufnehmen zu können. Vorzugsweise liegt der Kopplungsstrang im Kopplungszustand auch mit seiner radialen Außenwandung auf der Nutengrundwandung der Ringnuten beider Kopplungspartner an, so dass er in seiner Lage zuverlässig festgelegt ist und den Ringnutenraum vollständig ausfüllt.

Durch die vorgestellte Lösung wird somit eine Kolbeneinheit eines Arbeitszylinders bereitgestellt, bei welcher die benötigten Kopplungspartner ausschließlich durch die Verwendung eines tragfähigen Kopplungsstrangs miteinander verbindbar sind, wobei die Verbindung besonders einfach durch Einschieben des Kopplungsstrangs in den, durch die korrespondierend gegenüberliegenden Ringnuten der Kopplungspartner gebildeten, Ringnutenraum erfolgt.

Diese Kopplungslösung reduziert die Fertigungs-, Material- und Montagekosten, die ihrerseits einen erheblichen Einfluss auf die Reduzierung der Energiekosten ausüben.

Negative Auswirkungen einer Wärmebeaufschlagung, wie dies beispielsweise bei einer Schrumpfkopplung oder bei einer Schweißverbindung der Fall sein kann, entfallen.

Gegenüber den bekannten Lösungen weist eine erfindungsgemäße Kolbeneinheit somit die technologischen Vorteile auf, dass diese zum einen besonders einfach herstellbar ist und dass zum anderen keine zusätzlichen Verfahrensschritte, insbesondere zum Herstellen einer stoffschlüssigen Verbindung der Kopplungspartner, notwendig sind, wodurch vor allem die Herstellungskosten einer solchen Kolbeneinheit gesenkt werden können.

Darüber hinaus zeichnet sich eine erfindungsgemäße Kolbeneinheit gegenüber herkömmlichen Vorrichtungen durch eine höhere Dauerfestigkeit und somit durch eine gesteigerte Verwendungsdauer aus. Als weiterer wesentlicher Vorteil kann jede Winkellage der Kopplungspartner zueinander und somit die Ausrichtung des Kolbens in dem Zylinder problemlos und ohne zusätzlichen Aufwand bereitgestellt werden.

Die erfindungsgemäße Kolbeneinheit zeichnet sich ferner dadurch aus, dass der einzuschiebende zweite Kopplungspartner, gegenüber einem Innenmaß des ersten Kopplungspartners ein entsprechendes Übermaß aufweist und dass so in der Montageendlage eine Presspassung zwischen den Kopplungspartnern entsteht. Die Presspassung stellt einen Reibschluss zwischen den Kopplungspartnern her. Über den Reibschluss sind axial wirkende Kräfte aufnehmbar. Zudem sind die Kopplungspartner gegen Verdrehung gesichert.

Auf diese Weise wird, als besonderer technologischer Vorteil der Lösung, eine Hybridkopplung aus einer kraftschlüssigen Kopplung durch die Presspassung und einer formschlüssigen Kopplung durch den Kopplungsstrang bereitgestellt, welche sich durch eine Erhöhung der maximal aufnehmbaren axialen Kräfte und eine Verbesserung der Dauerfestigkeit der Kolbeneinheit auszeichnet. Die axial aufzunehmenden Kräfte können auf die beiden Kopplungen aufgeteilt werden, wobei das Verhältnis durch konstruktive Maßnahmen festgelegt werden kann.

Die beiden Kopplungspartner werden durch den Reibschluss axial spielfrei zueinander festgelegt. Ein eventuell unter einem Wechsel von Belastung und Entlastung der Kolbeneinheit im bestimmungsgemäßen Betrieb auftretendes, axiales Wandern der Kopplungspartner zueinander, welches beispielsweise zu einer Beschädigung etwa vorhandener Dichtungselemente führen könnte, kann als besonderer Vorteil somit verhindert werden.

Derartige Dichtungselemente liegen insbesondere bei Gleichlaufzylindern, bei welchen die Kolbenstange den Kolben durchsetzt, vor und dienen dazu, einen Übertritt eines Arbeitsmediums von einem Arbeitsraum des Gleichlaufzylinders in den anderen Arbeitsraum zu verhindern.

Es wirken erfindungsgemäß die formschlüssige Verbindung über den Kopplungsstrang und die kraftschlüssige Verbindung durch den Reibschluss zwischen den Kopplungspartner zusammen.

Insbesondere wird bei Kolbeneinheiten einfachwirkender Arbeitszylinder durch den Reibschluss die Relativposition zwischen den Kopplungspartnern, die diese unter hohen Belastungen einnehmen und einer Spielendlage des Kopplungsstrangs zu den axialen Seitenwandungen der Ringnuten entspricht, auch bei einem Lastzustandswechsel beibehalten. Der Reibschluss wird also zumindest bei vollem Betriebsdruck überwunden, sodass die Kopplungspartner in die Spielendlage gebracht und dort durch den Formschluss an einer weiteren axialen Relativbewegung gehindert werden. Der Reibschluss verhindert jedoch eine axiale Rückwärtsbewegung aus dieser Spielendlage und legt also die Kopplungspartner in der Relativposition der Spielendlage zueinander fest. Dies gilt entsprechend bei einer Kolbeneinheit eines Differenzialarbeitszylinders, bei der die seitens des Kolbenstangenraumes auf den Kolben beaufschlagbare Kraft geringer ist, als die durch die kraftschlüssige Verbindung durch den Reibschluss aufnehmbare Kraft während die seitens des Kolbenbodenraums auf den Kolben beaufschlagbare Kraft jedoch größer ist.

Durch die vorgestellte Lösung wird somit eine Kolbeneinheit eines Arbeitszylinders bereitgestellt, bei welcher die benötigten Kopplungspartner zum einen formschlüssig durch die Verwendung eines tragfähigen Kopplungsstrangs miteinander verbindbar sind, wobei die Verbindung besonders einfach durch Einschieben der Kopplungspartner ineinander und nachfolgendes Einbringen des Kopplungsstrangs erfolgt.
Zum anderen wird durch den bereitgestellten Reibschluss eine Relativbewegung zwischen den Kopplungspartner vollständig verhindert.

Erfindungsgemäß ist es darüber hinaus ebenfalls möglich, dass die axialen Kräfte allein durch die kraftschlüssige Presspassung aufgenommen werden, wobei der Formschluss durch den Kopplungsstrang in diesem Fall lediglich als Sicherung gegen ein Ausziehen des eingeschobenen Kopplungspartners aus dem jeweils anderen Kopplungspartner wirkt. In diesem Fall wird es als besonderer Vorteil ermöglicht, die kraftschlüssige Presspassung einschließlich deren notwendiger Kontaktflächen gemäß den normativen Lastzuständen zu dimensionieren, zugleich aber mittels der zusätzlichen formschlüssigen Verbindung mittels des Kopplungsstrangs kritische Überbelastungen zuverlässig aufgenommen werden können.

In einer bevorzugten Variante weist einer der Kopplungspartner eine Anlaufschräge auf, durch welche die Montage der Kopplungspartner und insbesondere das Einschieben des zweiten Kopplungspartners in den ersten Kopplungspartner erleichtert werden.
Soweit, insbesondere bei einer Kolbeneinheit eines Gleichlaufzylinders, ein Dichtungselement vorhanden ist, weist der das Dichtungselement nicht aufnehmende Kopplungspartner die Anlaufschräge auf.
Durch diese Anlaufschräge wird auf besonders vorteilhafte Weise während des Einschiebens des einen Kopplungspartners in den anderen Kopplungspartner ein Zurückdrücken des Dichtungselements in Richtung des jeweiligen, das Dichtungselement aufnehmenden, Kopplungspartners bewirkt und somit eine Beschädigung des Dichtungselements vorgebeugt.

Das Dichtungselement muss somit, als besonderer technologischer Vorteil, vor dem Ineinanderschieben der Kopplungspartner nicht durch zusätzliche Vorrichtungen oder Aufwendungen in Richtung des jeweiligen Kopplungspartners gedrückt werden.

Hinsichtlich der Anlaufschräge versteht sich für den Fachmann von selbst, dass bei speziellen Konfigurationen, insbesondere des Dichtungselements, anstelle einer einzigen Anlaufschräge auch mehrere einzelne Anlaufschrägen an dem jeweiligen Kopplungspartner vorhanden sein können.

Die Kopplungspartner einer erfindungsgemäßen Kolbeneinheit weisen in einer bevorzugten Weiterbildung axial versetzt weitere Ringnuten zur Aufnahme weiterer, in gleicher Weise axial versetzter, Kopplungsstränge auf.

Zum Einschieben der Kopplungsstränge in die sich jeweils ausbildenden Ringnutenräume weist ein Kopplungspartner ferner mehrere Zugangsöffnungen auf, wobei jede Zugangsöffnung vorzugsweise einem Ringnutenraum zugeordnet ist.

Das Vorsehen mehrerer Ringnuten und mehrerer Kopplungsstränge ist insbesondere dann von Vorteil, wenn die Verbindung während einer Verwendung der Kolbeneinheit hohen axialen Kräften ausgesetzt werden soll.

Um auch bei einer Anordnung mehrerer Kopplungsstränge zwischen den Kopplungspartnern ein sicheres und schadfreies Ineinanderschieben der Kopplungspartner zu gewährleisten, weisen die Ringnuten vorzugsweise ebenfalls Anlaufschrägen auf, wobei durch die Anlaufschrägen insbesondere ein erneutes Zurückdrücken eines vorhandenen Dichtungselements bewirkt wird.

Ferner sieht eine weitere vorteilhafte Variante der Erfindung vor, dass der Kopplungsstrang einen kreisförmigen Querschnitt aufweist.

Gleichzeitig ist die geometrische Kontur des den Kopplungsstrang aufnehmenden Ringnutenraums an den kreisförmigen Querschnitt des Kopplungsstrangs angepasst. Ein Vorteil besteht dabei darin, dass sich, bei einer Belastung der formschlüssigen Verbindung der Kopplungspartner, die in den Kopplungspartnern im Bereich des Ringnutenraums auftretenden Kerbwirkungen, im Vergleich zu einem Ringnutenraum mit rechteckigem Querschnitt, wirksam reduzieren lassen.

Gegenüber Kopplungssträngen mit einem rechteckigen Querschnitt weist ein erfindungsgemäßer Kopplungsstrang mit kreisförmigem Querschnitt unter Belastung einen günstigeren Verlauf der Spannungen in seinem Inneren auf, wodurch insbesondere die Dauerhaltbarkeit der formschlüssigen Verbindung der Kolbeneinheit nochmals verbessert werden kann.

Gleichzeitig ist ein Kopplungsstrang mit kreisrundem Querschnitt besonders einfach und kostengünstig herstellbar.

Eine weitere vorteilhafte Weiterbildung der Erfindung zeigt einen einfachen, aber wirkungsvollen Weg einer weiteren Verbesserung auf. Vorzugsweise weist eine Kolbenstange eine höhere Materialgüte, insbesondere einen höheren Elastizitätsmodul als ein Kolben auf. Um die Flächenpressung an den Seitenwandungen in den materialspezifisch zulässigen Flächenpressungswerten zu halten, zugleich aber die Ringnuten auch nicht tiefer auszubilden als erforderlich, wurde die Lösung gefunden, den Kopplungsstrang in seiner Eingrifflage in den Kopplungspartner mit dem geringeren Elastizitätsmodul mit einer größeren Überdeckungsfläche eingreifen zu lassen. Als Überdeckungsfläche ist der Flächenanteil der axial gerichteten Seitenwandung des Kopplungsstrangs zu verstehen, mit dem er axial belastet auf der Seitenwandung der Nut eines Kopplungspartners aufliegt. Die Größenrelationen der Überdeckungsflächen des Kopplungsstrangs können dabei auf einfache Weise durch das Verhältnis der Tiefen der Ringnuten zueinander bestimmt werden. Insbesondere bei einer Ausbildung der Kolbenstange als Hohlelement, kann auf diese Weise die Tiefe der Ringnut in der Kolbenstange sehr gering ausgebildet werden, während der Kopplungsstrang in der Eingriffslage entsprechend tiefer in den Kolben eingreift.

In einer weiteren vorteilhaften Weiterbildung der Erfindung ist der den Kopplungsstrang aufnehmende Ringnutenraum konisch in der Kolbeneinheit angeordnet.

Unter einer konischen Anordnung wird in diesem Zusammenhang verstanden, dass der Ringnutenraum einen Rechteckquerschnitt aufweist und dass sich aufgrund des Rechteckquerschnitts auf einer axialen Ober- und der Unterseite des Ringnutenraums zwei unterschiedlich Ringdurchmesser ausbilden, wobei die konische Ausbildung hierbei beispielsweise bewirkt, dass der Ringdurchmesser der Oberseite des Ringnutenraums kleiner ist als der Ringdurchmesser der Unterseite. Die radialen Begrenzungsflächen des Ringnutenraums entsprechen somit der Mantelfläche eines flachen Kegelstumpfes.

In den konisch angeordneten Ringnutenraum kann auf besonders vorteilhafte Art und Weise ein Kopplungsstrang eingeschoben werden, welcher sich während des Einschiebens an die geometrische Form des Ringnutenraums anpasst und welcher somit bei Erreichen seiner Endlage in dem Ringnutenraum ebenfalls in einer konischen Form vorliegt. Um eine entsprechende Anformbarkeit des Kopplungsstrangs an den konischen Ringnutenraum bereitzustellen, ist der Kopplungsstrang vorzugsweise segmentiert ausgebildet, wobei dies insbesondere durch axiale Einschnitte erfolgen kann. Es lässt sich eine günstige, vergleichsweise geringe, Flächenpressung, was vor allem bei einem minderwertigeren Werkstoff insbesondere eines Kolbens vorteilhaft ist, bei einer gleichzeitig schmalen Ausführung des Kopplungsstrangs erreichen.
Durch eine derartige konische Ausbildung des Ringnutenraums und des darin angeordneten Kopplungsstrangs wird eine besonders sichere und dauerfeste Verbindung der Kopplungspartner erzielt.

Ferner sieht eine bevorzugte Ausbildung der Erfindung vor, dass ein Ende des Kopplungsstrangs so zugänglich ist, dass der Kopplungsstrang aus dem Ringnutenraum ausziehbar ist.

Hierzu kann der jeweilige Endabschnitt des Kopplungsstrangs beispielsweise einen Überstand aufweisen oder in dem, die Zugangsöffnung aufweisenden, Kopplungspartner eine Aussparung vorgesehen sein, über welche das Ende des Kopplungsstrangs für ein äußeres Einwirken zugänglich ist. Der Kopplungsstrang kann dabei vorzugsweise hakenförmig ausgebildet sein oder einen Gewindeabschnitt aufweisen, um so wirksam Zugkräfte einleiten zu können.

Die Erfindung wird nachfolgend in Ausführungsbeispielen anhand von
- Fig. 1: Schnittdarstellung Kolbeneinheit ohne Kopplungsstrang
- Fig. 2: Schnittdarstellung Kolbeneinheit mit einem Kopplungsstrang
- Fig. 3: Halbschnitt Kolbeneinheit mit zwei Kopplungssträngen
- Fig. 4: Halbschnitt Kolbeneinheit mit kreisrundem Kopplungsstrang
- Fig. 5: Halbschnitt Kolbeneinheit mit konischem Ringnutenraum und konischem Kopplungsstrang
- Fig. 6: Schnittdarstellung Kolbeneinheit in einer Draufsicht
näher erläutert.

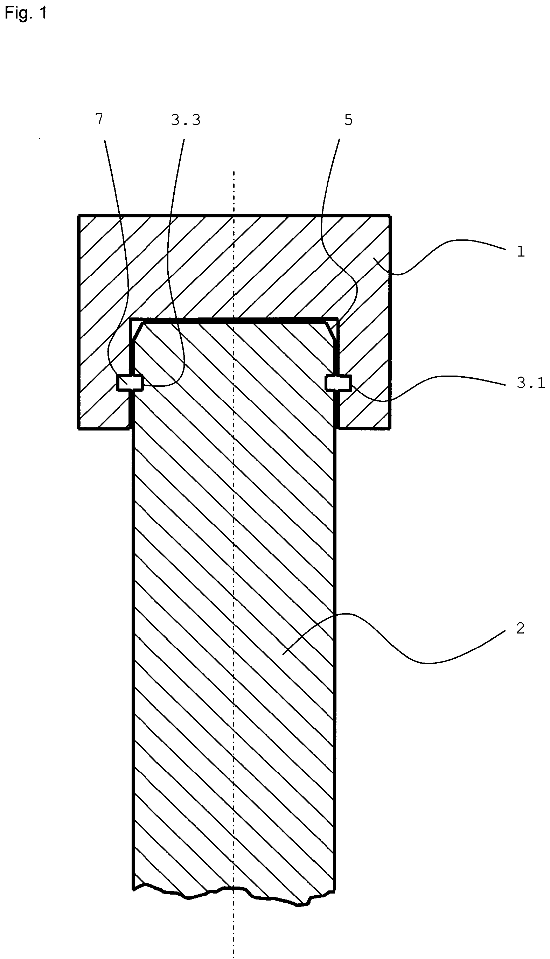

Fig. 1 zeigt eine erfindungsgemäße Kolbeneinheit im Vollschnitt ohne Kopplungsstrang.

Die Kolbeneinheit ist mehrteilig ausgebildet und weist einen Kolben 1 und eine Kolbenstange 2 auf, wobei die Kolbenstange 2 teilweise in den Kolben 1 eingeschoben ist.
Der Kolben 1 und die Kolbenstange 2 werden nachfolgend auch zusammengefasst als Kopplungspartner beschrieben.

Der Kolben 1 und die Kolbenstange 2 weisen jeweils eine erste Ringnut 3.1 und 3.3 auf, wobei die erste Ringnut 3.1 des Kolbens 1 als umlaufende Innennut und die erste Ringnut 3.3 der Kolbenstange 2 als umlaufende Außennut ausgebildet sind und wobei durch die Ringnuten 3 ein Ringnutenraum 7 gebildet wird.

Um das Einschieben der Kolbenstange 2 in den Kolben 1 zu vereinfachen, weist die Kolbenstange an dem, dem Kolben 1 zugewandten Ende zusätzlich eine umlaufend ausgebildete Anlaufschräge 5 auf.

Kolben 1 und Kolbenstange 2 sind erfindungsgemäß mittels einer formschlüssigen Verbindung miteinander gekoppelt.

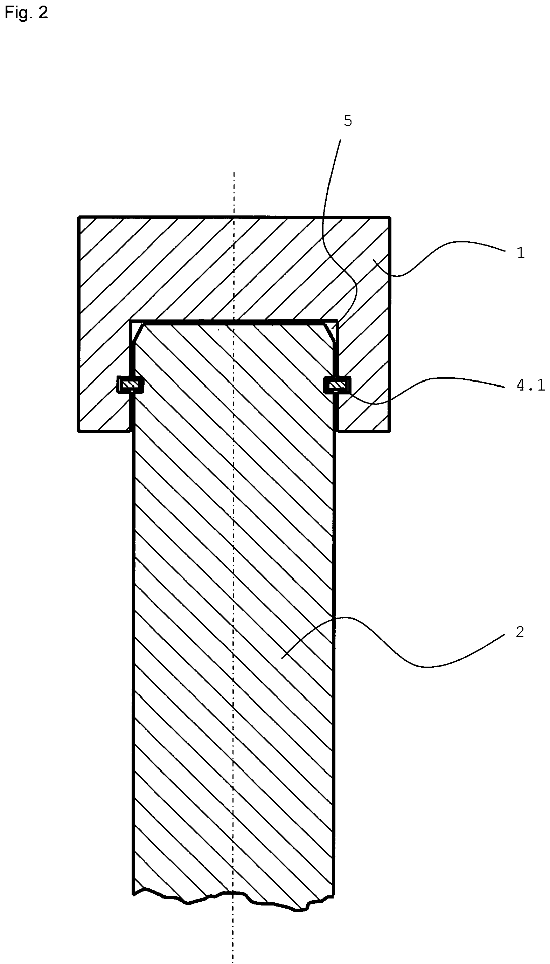

Wie in Fig. 2 dargestellt, wird die formschlüssige Verbindung vorliegend dadurch erreicht, dass innerhalb des Ringnutenraums 7 der Kolbeneinheit ein Kopplungsstrang 4.1 angeordnet ist.
Vorliegend weist der Kopplungsstrang 4.1 einen rechteckigen Querschnitt auf, wobei erfindungsgemäß auch Kopplungsstränge mit andersförmigen Querschnitten angewandt werden können.

Der Formschluss der Kopplung des Kolbens 1 und der Kolbenstange 2 wird erfindungsgemäß dadurch erzielt, dass in der Endlage der Kolbenstange 2 in dem Kolben 1, die dem kolbenseitigen Ende der Kolbenstange 2 zugewandte Oberfläche des Kopplungsstrangs 4.1 an den dem Kopplungsstrang 4.1 zugewandten Wandungen der Ringnuten 3.1 und 3.3 anliegt.

Als besonderes technologisches Merkmal weist der Außendurchmesser der Kolbenstange 2 gegenüber dem Innendurchmesser des Kolbens 1 ein Übermaß auf. Mittels des Übermaßes wird in der Montageendlage der Kolbenstange 2 eine Presspassung und somit ein Reibschluss zwischen dieser und dem Kolben 1 bereitgestellt.
Durch den bereitgestellten Reibschluss werden die Kolbenstange 2 und der Kolben 1 axial in deren Lage zueinander spielfrei festgelegt, wodurch ein axiales Wandern des Kolbens 1 gegenüber der Kolbenstange 2 wirksam unterbunden wird. Auf diese Weise sind Abschiebschrotungen verhinderbar.

Zudem wird durch die bereitgestellte Presspassung ein unerwünschtes Verdrehen des Kolbens 1 gegenüber der Kolbenstange 2 unterbunden.

Im vorliegenden Ausführungsbeispiel werden die Kräfte, die während des vorgesehenen Betriebs eines Arbeitszylinders auftreten, in dem die Kolbeneinheit aufgenommen ist, über den bereitgestellten Reibschluss vollständig aufgenommen. Im vorliegenden Ausführungsbeispiel dient die formschlüssige Verbindung der Kopplungspartner 1 und 2 durch den Kopplungsstrang 4.1 daher zur Sicherung, um auch bei extremen Lastzuständen des Arbeitszylinders, beispielsweise bei Fehlbedienungen, und einem eventuell hierdurch hervorgerufenen Überwinden des Reibschlusses, ein Lösen des Kolbens 1 von der Kolbenstange 2 zu verhindern. Die Betriebssicherheit wird somit ohne Höherdimensionierung des Presspassung erhöht.

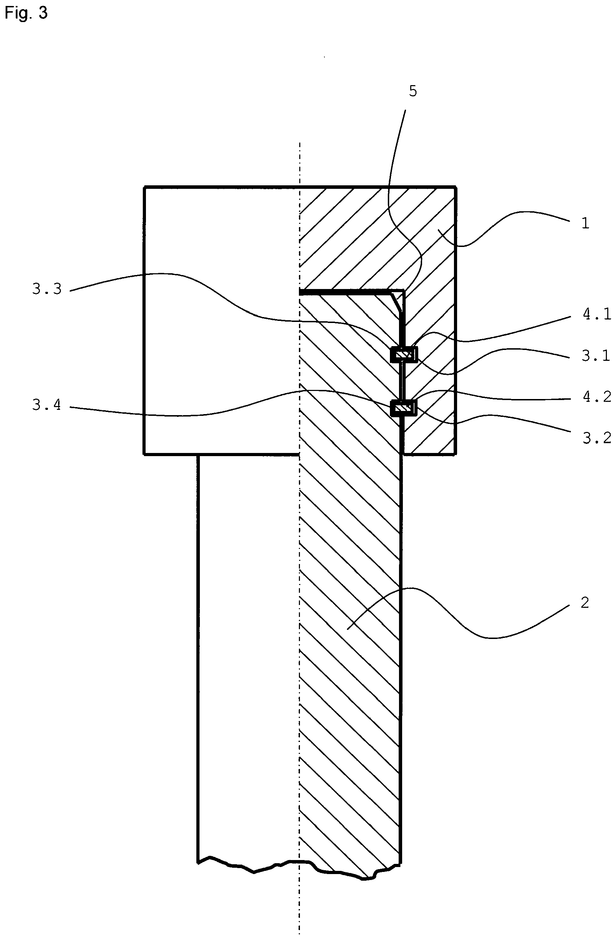

Fig. 3 zeigt ein Ausführungsbeispiel einer erfindungsgemäßen Kolbeneinheit im Halbschnitt, wobei die Kolbeneinheit zur Erhöhung der axialen Belastbarkeit, zwei Kopplungsstränge 4.1 und 4.2 aufweist.

Vorliegend ist der Kopplungsstrang 4.1 in dem Ringnutenraum zwischen einer ersten Ringnut 3.1 des Kolbens 1 und einer ersten Ringnut 3.3 der Kolbenstange 2 angeordnet.
Der Kopplungsstrang 4.2 ist in einem weiteren Ringnutenraum, der durch eine zweite Ringnut 3.2 des Kolbens 1 und eine zweite Ringnut 3.4 der Kolbenstange 2 gebildet wird, angeordnet.

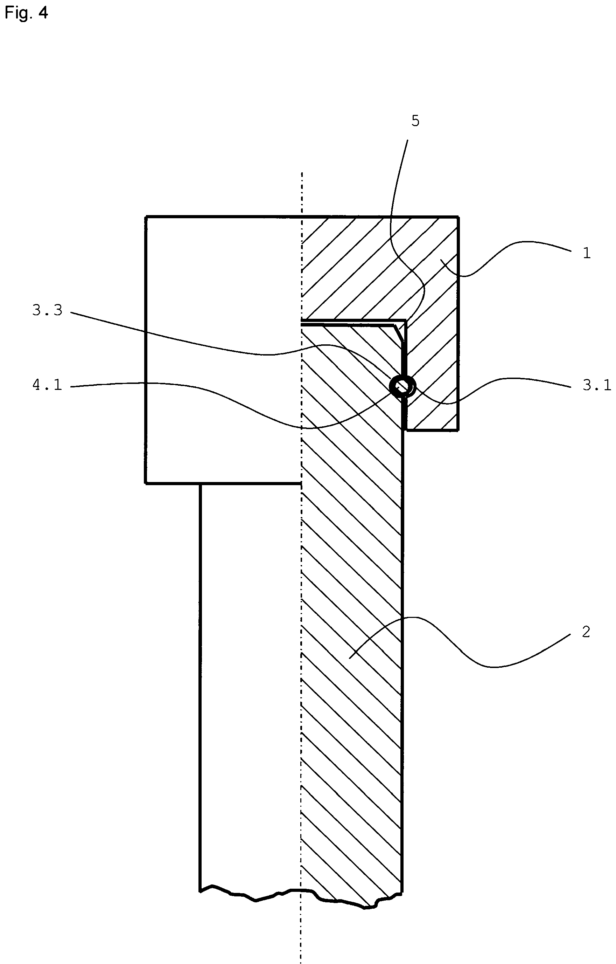

In einem weiteren Ausführungsbeispiel gemäß Fig. 4 weist der Kopplungsstrang 4.1 einen kreisrunden Querschnitt auf.

Ein solcher kreisrunder Querschnitt geht besonders vorteilhaft mit einer Reduzierung der Herstellungskosten für den Kopplungsstrang 4.1 sowie mit einer Optimierung des Verlaufs der inneren Spannungen in dem Kopplungsstrang 4.1 während dessen Verspannung einher.

Um einen möglichst großen Bereich zu schaffen, in welchem sich ein Formschluss zwischen dem Kopplungsstrang 4.1 und den Ringnuten 3 einstellt, sind diese in deren Kontur an die Querschnittsgeometrie des Kopplungsstrangs 4.1 angepasst.

Das Anpassen der Ringnutkonturen an den Querschnitt des Kopplungsstrangs 4.1 hat darüber hinaus den technologischen Vorteil, dass, aufgrund der sich einstellenden Rundungen der Ringnutkonturen, Kerbwirkungen, welche bei einer Belastung der formschlüssigen Verbindung auftreten, weitestgehend vermieden werden können.

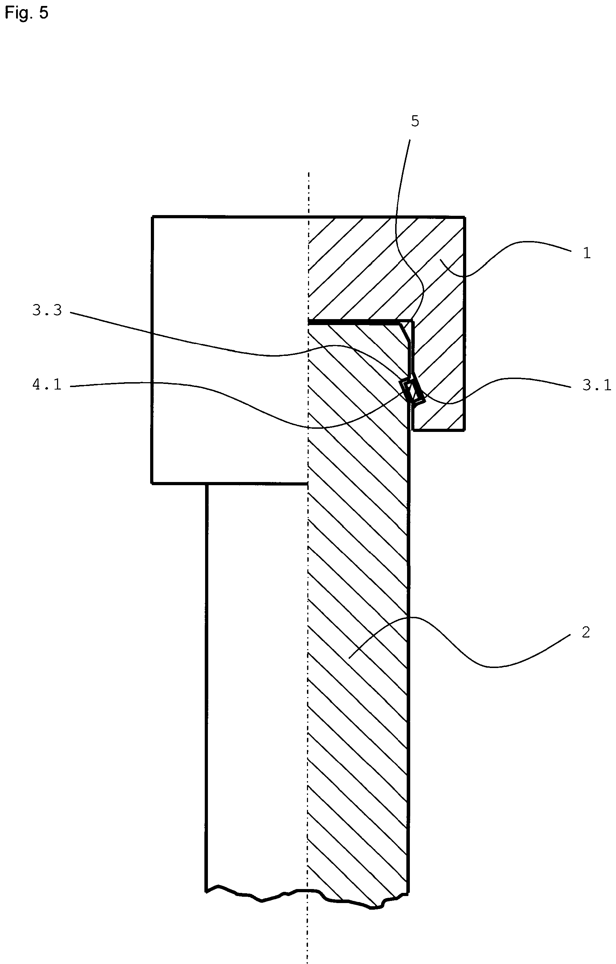

Als weiteres Ausführungsbeispiel zeigt Fig. 5 eine erfindungsgemäße Kolbeneinheit mit einem konisch ausgebildeten Kopplungsstrang 4.1, welcher mehrere Segmente aufweist.

In diesem Fall sind die Ringnuten 3.1 und 3.3 geometrisch so ausgeformt, dass sich zwischen diesen ein konischer Ringnutenraum ausbildet, in welchen sich der Kopplungsstrang 4.1 bei dessen Einschieben anformt.

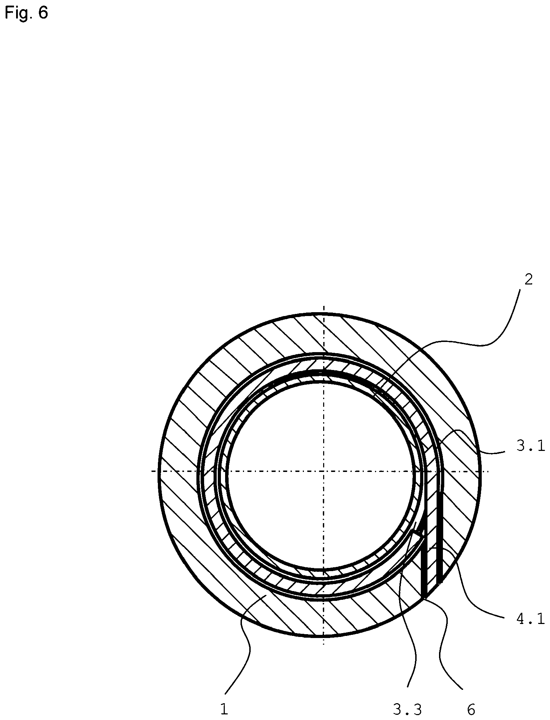

Fig. 6 zeigt eine erfindungsgemäße Kolbeneinheit in einer geschnittenen Draufsicht mit einer, als Hohlelement ausgebildeten, Kolbenstange 2.

Wie in Fig. 6 erkennbar ist, weist der außenliegende Kolben 1 eine tangentiale Zugangsöffnung 6 auf, über welche der Kopplungsstrang 4.1 in den durch die Ringnuten 3.1 und 3.3 gebildeten Ringnutenraum einschiebbar ist.

### Verwendete Bezugszeichen

- 1: Kolben
- 2: Kolbenstange
- 3.1: erste Ringnut Kolben
- 3.2: zweite Ringnut Kolben
- 3.3: erste Ringnut Kolbenstange
- 3.4: zweite Ringnut Kolbenstange
- 4.1: erster Kopplungsstrang
- 4.2: zweiter Kopplungsstrang
- 5: Anlaufschräge
- 6: Zugangsöffnung
- 7: Ringnutenraum

## Patentansprüche

1. Kolbeneinheit eines Arbeitszylinders, aufweisend einen ersten Kopplungspartner und einen zweiten Kopplungspartner, wobei der erste Kopplungspartner als Kolben (1) und der zweite Kopplungspartner als Kolbenstange (2) ausgebildet sind und wobei der zweite Kopplungspartner in den ersten Kopplungspartner axial eingeschoben ist,
wobei die Kopplungspartner jeweils eine Ringnut (3) aufweisen, wobei die Ringnut (3) des eingeschobenen Kopplungspartners durch eine Außennut und die Ringnut (3) des anderen Kopplungspartners durch eine Innennut gebildet werden und wobei sich die Ringnuten (3) der Kopplungspartner korrespondierend gegenüberliegen und einen Ringnutenraum (7) bilden, und wobei ein Kopplungspartner eine Zugangsöffnung (6) zu dem Ringnutenraum (7) aufweist,
und wobei die Kolbeneinheit einen Kopplungsstrang (4) aufweist, welcher in die Ringnuten (3) beider Kopplungspartner eingreift, wobei der Kopplungsstrang (4) durch die Zugangsöffnung (6) des einen Kopplungspartners in den Ringnutenraum (7) einschiebbar ist und wobei durch den Eingriff des Kopplungsstrangs (4) in die Ringnuten (3) beider Kopplungspartner eine formschlüssige Verbindung zwischen diesen bereitgestellt wird,
**dadurch gekennzeichnet,**
**dass** der eingeschobene zweite Kopplungspartner, gegenüber einem Innendurchmesser des ersten Kopplungspartners, ein Übermaß aufweist, wobei zwischen den Kopplungspartnern eine kraftschlüssige Verbindung bereitgestellt wird,
und **dass** die formschlüssige Verbindung und die kraftschlüssige Verbindung eine Hydridkopplung ausbilden, wobei mittels der kraftschlüssigen Verbindung die Kopplungspartner axial und rotatorisch unbeweglich zueinander festgelegt sind und wobei die formschlüssige und die kraftschlüssige Verbindung ausgebildet sind, axiale Kräfte zwischen den Kopplungspartnern aufzunehmen.

2. Kolbeneinheit nach Anspruch 1,
**dadurch gekennzeichnet,**
**dass** die Kopplungspartner weitere, axial versetzte, Ringnuten (3) zur Aufnahme weiterer, axial versetzter, Kopplungsstränge (4) aufweisen.

3. Kolbeneinheit nach einem der vorhergehenden Ansprüche,
**dadurch gekennzeichnet,**
**dass** der Kopplungsstrang (4) einen kreisförmigen Querschnitt aufweist.

4. Kolbeneinheit nach einem der vorhergehenden Ansprüche,
**dadurch gekennzeichnet,**
**dass** der erste und der zweite Kopplungspartner unterschiedlich hohe Elastizitätsmoduln aufweisen, wobei eine erste Überdeckungsfläche des im Eingriff stehenden Kopplungsstrangs (4) mit einer Seitenwandung der Ringnut (3) des einen Kopplungspartners mit dem höheren Elastizitätsmodul kleiner ist, als eine zweite Überdeckungsfläche des Kopplungsstrangs (4) mit einer Seitenwandung der Ringnut (3) des anderen Kopplungspartners mit dem niedrigeren Elastizitätsmodul.

5. Kolbeneinheit nach einem der Ansprüche 1 bis 2 und 4,
**dadurch gekennzeichnet,**
**dass** der Ringnutenraum (7) konisch angeordnet ist.

6. Kolbeneinheit nach einem der vorhergehenden Ansprüche,
**dadurch gekennzeichnet,**
**dass** ein Endabschnitt des Kopplungsstrangs (4) so zugänglich ist, dass der Kopplungsstrang (4) aus dem Ringnutenraum (7) ausziehbar ist.

## Claims

1. A piston unit of a working cylinder, comprising a first coupling partner and a second coupling partner, the first coupling partner being designed as a piston (1) and the second coupling partner being designed as a piston rod (2), and the second coupling partner being inserted axially into the first coupling partner,
wherein each of the coupling partners has an annular groove (3), wherein the annular groove (3) of the inserted coupling partner is formed by an-outer groove and the annular groove (3) of the other coupling partner is formed by an inner groove, and wherein the annular grooves (3) of the coupling partners are positioned correspondingly opposite to one another and form an annular groove space (7),
and wherein one coupling partner is provided with an access opening (6) to the annular groove space (7),
and wherein the piston unit comprises a coupling strand (4) which engages in the annular grooves (3) of both coupling partners, wherein the coupling strand (4) can be slid in the annular groove space (7) through the access opening (6) of the one coupling partner, and wherein a positive connection is established between the two coupling partners by the engagement of the coupling strand (4) in their annular grooves (3),
chracterized in
that the inserted second coupling partner has an oversize with respect to an inner diameter of the first coupling partner, wherein a force-locked connection is established between the coupling partners,
and that the positive connection and the force-locked connection form a hydride coupling, wherein the coupling partners are fixed by means of the force-locked connection in such a manner that they are axially and rotatably immovable one to another, and the positive and the force-locked connections are adapted to absorb axial forces between the coupling partners.

2. The piston unit acccording to claim 1,
**characterized in**
**that** the coupling partners are provided with further, axially offset, annular grooves (3) for receiving further, axially offset, coupling strands (4).

3. The piston unit acccording to one of the previous claims,
**characterized in**
**that** the coupling strand (4) has a circular cross-section.

4. The piston unit acccording to one of the previous claims,
**characterized in**
**that** the first and second coupling partners have elasticity moduli of different magnitudes, wherein a first overlapping surface of the engaged coupling strand (4) with a side wall of the annular groove (3) of the coupling partner with the higher elasticity modulus is smaller than a second overlapping surface of the coupling strand (4) with a side wall of the annular groove (3) of the other coupling partner with the lower elasticity modulus.

5. The piston unit according to one of the claims 1 to 2 and 4,
**characterized in**
**that** the annular groove space (7) is arranged conically.

6. The piston unit according to one of the previous claims,
**characterized in**
**that** an end section of the coupling strand (4) is accessible such that the coupling strand (4) can be pulled out of the annular groove space (7).

## Revendications

1. Unité à piston d'un vérin présentant un premier partenaire d'accouplement et un deuxième partenaire d'accouplement, le premier se présentant sous la forme d'un piston (1) et le deuxième sous la forme d'une tige à piston (2) et le deuxième partenaire d'accouplement étant introduit axialement dans le premier partenaire d'accouplement,
les partenaires d'accouplement présentant respectivement une rainure annulaire (3), la rainure annulaire (3) du partenaire d'accouplement introduit étant formée par une rainure extérieure et la rainure annulaire (3) de l'autre partenaire d'accouplement par une rainure intérieure et les rainures annulaires (3) des partenaires d'accouplement se faisant face de manière correspondante et formant un espace de la rainure annulaire (7),
et un partenaire d'accouplement présentant une ouverture d'accès (6) à l'espace de la rainure annulaire (7),
et l'unité à piston présentant un système d'accouplement (4), qui pénètre dans les rainures annulaires (3) des deux partenaires d'accouplement, le système d'accouplement (4) pouvant être introduit dans l'espace de la rainure annulaire (7) par l'ouverture d'accès (6) du partenaire d'accouplement et l'introduction du système d'accouplement (4) dans les rainures annulaires (3) des deux partenaires d'accouplement créant un assemblage par complémentarité de forme entre eux,
est **caractérisée en ce que**,
le deuxième partenaire d'accouplement introduit est surdimensionné par rapport à un diamètre intérieur du premier partenaire d'accouplement, ce qui crée un assemblage à force supplémentaire entre les deux partenaires d'accouplement,
et que l'assemblage par complémentarité de forme et l'assemblage à force supplémentaire forment un accouplement hybride, les partenaires d'accouplement étant axialement et rotativement fixés de façon immobile l'une par rapport à l'autre par l'assemblage à force supplémentaire et l'assemblage par complémentarité de forme et l'assemblage à force supplémentaire étant formés pour compenser des forces axiales entre les partenaires d'accouplement.

2. Unité à piston suivant la revendication 1
est **caractérisée en ce que**
les partenaires d'accouplement présentent d'autres rainures angulaires (3) axialement décalées pour le logement d'autres systèmes d'accouplement axialement décalées.

3. Unité à piston suivant une des revendications précédentes
est **caractérisé en ce que**
le système d'accouplement (4) possède une section transversale circulaire.

4. Unité à piston suivant une des revendications précédentes
est **caractérisé en ce que**
le premier et le deuxième partenaire d'accouplement présentent des modules d'élasticité différents, et une première surface de recouvrement du système d'accouplement (4) en prise avec une paroi latérale de la rainure annulaire (3) du partenaire d'accouplement avec le plus haut module d'élasticité étant plus petite que la deuxième surface de recouvrement du système d'accouplement (4) en prise avec une paroi latérale de la rainure annulaire (3) de l'autre partenaire d'accouplement avec le plus bas module d'élasticité.

5. Unité à piston suivant une ou plusieurs des revendications 1 à 2 et 4
est **caractérisé en ce que**
l'espace de la rainure annulaire (7) est disposé **en ce qu'**il est de forme conique.

6. Unité à piston suivant une des revendications précédentes
est **caractérisé en ce qu'**
une section d'extrémité du système d'accouplement (4) est accessible de sorte que le système d'accouplement (4) puisse être retiré de l'espace de la rainure annulaire (7).
